# DEMANDE DE BREVET EUROPEEN

(11) **EP 2 236 321 A1**
(43) Date de publication de la demande: **06.10.2010**
(21) Numéro de dépôt: 10305331.0
(22) Date de dépôt: 31.03.2010
(51) Int. Cl.: B60C 25/138

(54) **Dispositif pour mettre en correspondance deux repères que présente une partie d'un pneumatique et une partie d'une jante constituant un ensemble monté**

(30) Priorité: 01.04.2009 FR 0952103
(71) Demandeur: Atamec BSMA Ingenierie, 42000 Saint-Etienne (FR)
(72) Inventeur: Badaroux, Paul, 42270 Saint Priest en Jarez (FR)
(74) Mandataire: Thivillier, Patrick

(57) **Abrégé**

Le dispositif est constitué par un poste monobloc compact comprenant :
- des moyens de positionnement de l'ensemble monté (2) - (3) en regard d'un système de vision (V) apte à localiser les repères ;
- des moyens de calcul de l'angle résultant du décalage des repères ;
- un ensemble (A) - (B) - (C) apte à assurer un entraînement en rotation, selon la valeur de l'angle calculé, de la jante par rapport au pneumatique ou inversement pour aligner les repères ;
- des moyens d'amenée et d'évacuation de l'ensemble monté ;

lesdits moyens et ensemble étant assujettis à une unité de commande et de traitement programmable pour un fonctionnement automatique sans intervention manuelle quel que soit le type d'ensemble monté.

## Description

L'invention se rattache au secteur technique des installations pour mettre en correspondance des repères ou autres que présentent deux pièces concentriques de révolution.

L'invention trouve une application particulièrement avantageuse dans le cas d'ensembles montés pour véhicules, notamment automobiles. Dans la suite de la description, on désigne par ensemble monté, une jante sur laquelle est monté un pneumatique.

Dans le domaine des ensembles montés pour véhicules, outre la nécessité de procéder à un équilibrage, afin d'éviter tout phénomène vibratoire en phase de roulement, il est également apparu important de supprimer ou, à tout le moins, de diminuer de manière significative le balourd qui peut exister après un montage du pneumatique sur la jante.

D'une manière parfaitement connue pour un homme du métier, le balourd est repéré en fixant, par exemple, des pastilles de couleurs différentes, l'une l'étant sur le flanc du pneumatique, à proximité de la jante, l'autre l'étant sur la jante, à proximité du bourrelet du pneumatique.

Ces deux repères délimitent, par rapport au centre de la roue, un angle qui correspond au déphasage entre le point de balourd identifié sur la jante et celui du pneu (valeur maximum de la force radiale). Par conséquent, pour supprimer ce balourd, il convient de mettre en correspondance ou d'aligner ces deux repères. Généralement, cette opération est réalisée sur des installations complexes dites de « matching ».

Le but recherché est donc d'optimiser les caractéristiques de l'ensemble monté, c'est-à-dire du pneumatique monté sur la jante, afin d'optimiser la valeur maximum de la variation de force radiale de l'enveloppe du pneumatique avec la valeur maximum du balourd de la jante.

Les installations de matching connues sont d'une relative complexité et ne présentent pas une ergonomie optimale. De même, ces installations présentent une certaine rigidité en ce sens qu'il est nécessaire de procéder à de nombreux réglages pour passer d'une série d'ensembles montés dimensionnels à une autre série. Autrement dit, si l'installation est réglée pour traiter des ensembles montés de caractéristiques dimensionnelles déterminées, il sera nécessaire d'arrêter l'installation et de procéder à de nouveaux réglages pour pouvoir intervenir sur des ensembles montés de caractéristiques dimensionnelles différentes.

L'état de la technique peut également être illustré par l'enseignement des brevets US 4,547,945 et EP 1.564.028 qui divulguent des dispositions pour l'alignement angulaire d'un pneu sur la jante, l'alignement s'effectuant après avoir tourner la jante par rapport au pneu. Dans l'un et l'autre de ces documents, le maintien de la jante en vue de sont entraînement en rotation par rapport au pneu s'effectue par le centre de la jante. Cette solution n'est pas satisfaisante étant donné que le couple de serrage peut être insuffisant, en observant par ailleurs que certaines jantes ne présentent pas un trou central.

L'invention s'est fixée pour but de remédier à ces inconvénients d'une manière simple, sûre, efficace et rationnelle.

Le problème technique que se propose de résoudre l'invention est de simplifier, d'une manière significative, l'ensemble de l'installation avec pour objectif de regrouper les principales opérations sur un même poste de travail avec la possibilité d'auto-adapter certains moyens pour permettre de traiter facilement les ensembles montés de diamètre différent, d'une manière automatique.

Pour résoudre un tel problème, il a été conçu et mis au point un dispositif pour mettre en correspondance deux repères que présentent une partie d'un pneumatique et une partie d'une jante constituant un ensemble monté, du type de ceux comprenant, d'une manière connue, les moyens définis dans la première partie de la revendication 1.

Le problème posé de traiter en automatique tout type d'ensemble monté, de différentes dimensions, y compris lorsque la jante ne présente pas de trou central, est résolu par les moyens relevant de la deuxième partie de la revendication 1.

Pour résoudre le problème posé de permettre une grande souplesse de fonctionnement, en considérant le caractère compact du dispositif, les moyens de positionnement de l'ensemble monté sont constitués par un convoyeur associé à un système de monte et baisse pour disposer l'ensemble monté en regard de moyens de centrage de la roue et d'entraînement de la jante.

Pour résoudre le problème posé d'assurer le centrage de l'ensemble monté, et ce quel que soit son diamètre, les moyens de centrage sont constitués par des modules venant serrer, d'une manière symétrique, en 4 points, la bande de roulement du pneumatique, lesdits modules étant assujettis à un organe de commande.

D'une manière avantageuse, le système de vision comprend, par exemple, une ou plusieurs caméras et leurs objectifs, des rampes d'éclairage de la zone où est centrée la roue, une carte d'acquisition et de transfert des données à une unité de commande et de traitement pour le déplacement circulaire relatif entre la jante et le pneumatique en fonction du calcul de l'angle résultant du décalage des repères.

Selon une autre caractéristique, le dispositif selon l'invention est assujetti à une unité de commande et de traitement programmée pour réaliser le cycle de fonctionnement suivant :
- mise en origine automatique selon ensembles montés ;
- transfert de la roue au moyen du convoyeur au niveau du système de vision ;
- commande des bras de centrage de la roue ;
- identification et/ou calcul des points de balourd ;
- calcul de l'angle résultant du positionnement des repères ;
- commande des moyens aptes à assurer le détalonnage ;
- commande de la pince pour le serrage de la jante et son entraînement par rapport au pneumatique en fonction du calcul de l'angle ;
- libération des moyens de commande, de serrage, de détalonnage et d'entraînement ;
- évacuation de l'ensemble monté.

Compte tenu des caractéristiques à la base du dispositif selon l'invention :
- soit les repères sont constitués, par exemple, par deux pastilles, l'une étant fixée temporairement au niveau de l'un des flancs du pneumatique, l'autre étant fixée à proximité du bord de la jante ;
- soit l'un des repères est constitué par une pastille fixée temporairement au niveau de l'un des flancs, l'autre étant constitué par la valve que présente la jante ou par un angle par rapport à une référence donnée sur la jante.

L'invention est exposée ci-après plus en détail à l'aide des figures des dessins annexés dans lesquels :

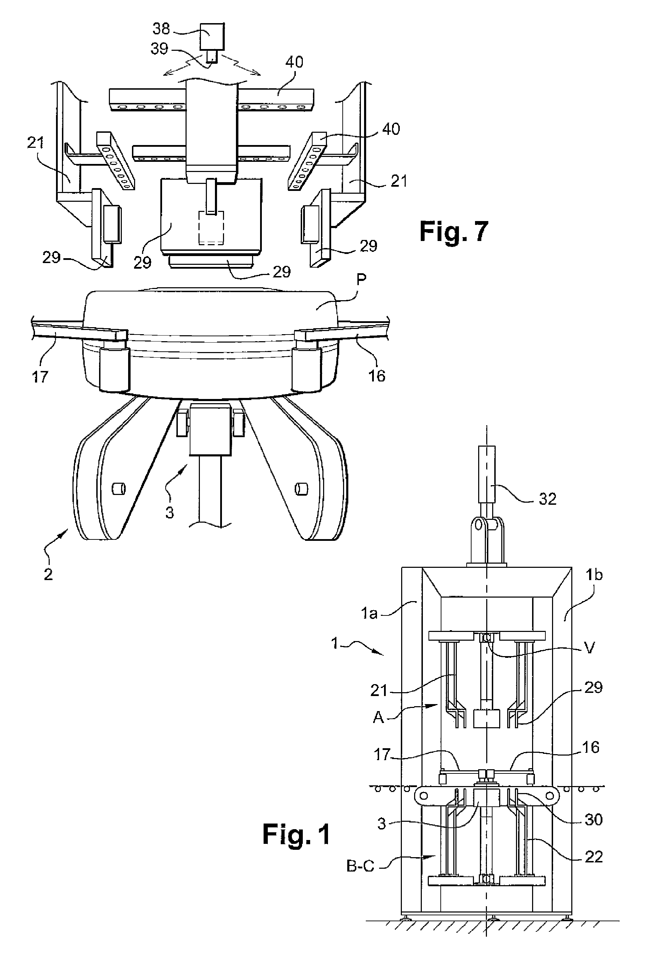

- la figure 1 est une vue de face du dispositif ;
- la figure 2 est une vue à caractère schématique et fonctionnel du convoyeur à bande avec le système monte et baisse ;
- la figure 3 est une vue à caractère schématique et fonctionnel des moyens d'étalonnage ;
- la figure 4 est une vue à caractère schématique et fonctionnel des moyens de serrage et d'entraînement en rotation de la jante par rapport au pneumatique détalonnée ;
- la figure 5 est une vue à caractère schématique et fonctionnel de l'ensemble centreur ;
- la figure 6 est une vue à caractère schématique et fonctionnel du système de vision ;
- la figure 7 est une vue partielle en perspective d'une partie du dispositif selon l'invention.

L'invention trouve une application avantageuse, qui ne doit toutefois pas être considérée comme limitative, pour mettre en correspondance deux repères (R1) et (R2) qui présentent une partie d'un pneumatique (P) et une partie d'une jante (J) constituant un ensemble monté (R).

L'angle formé par les deux repères (R1) et (R2) correspond au balourd et à la valeur maximum de la variation de la force radiale de l'enveloppe du pneumatique avec la valeur maximum du balourd de la jante.

Le dispositif selon l'invention a pour fonction de positionner automatiquement les points de mesure de ces deux repères matérialisés par les repères (R1) et (R2).

Le dispositif est réalisé à partir d'un poste monobloc compact constitué sous forme d'une structure porteuse dont le bâti (1) est sensiblement en forme de portique. Entre les montants verticaux (1a) et (1b) de l'ensemble du bâti (1), est disposé un convoyeur à bande (2), sur lequel est amené, par tout moyen connu et approprié, l'ensemble monté (R), c'est-à-dire de la jante équipée de son pneumatique.

Entre les bandes du convoyeur (2), sensiblement dans la zone médiane du bâti (1), est disposé un système de monte et baisse (3). Un système de vision (V) est assujetti à des moyens de calcul de l'angle résultant du décalage desdits repères (R1) et (R2) en vue d'asservir un ensemble apte à assurer un entraînement en rotation, selon la valeur dudit angle calculé, de la jante par rapport au pneumatique ou inversement afin d'aligner lesdits repères ou les mettre en phase.

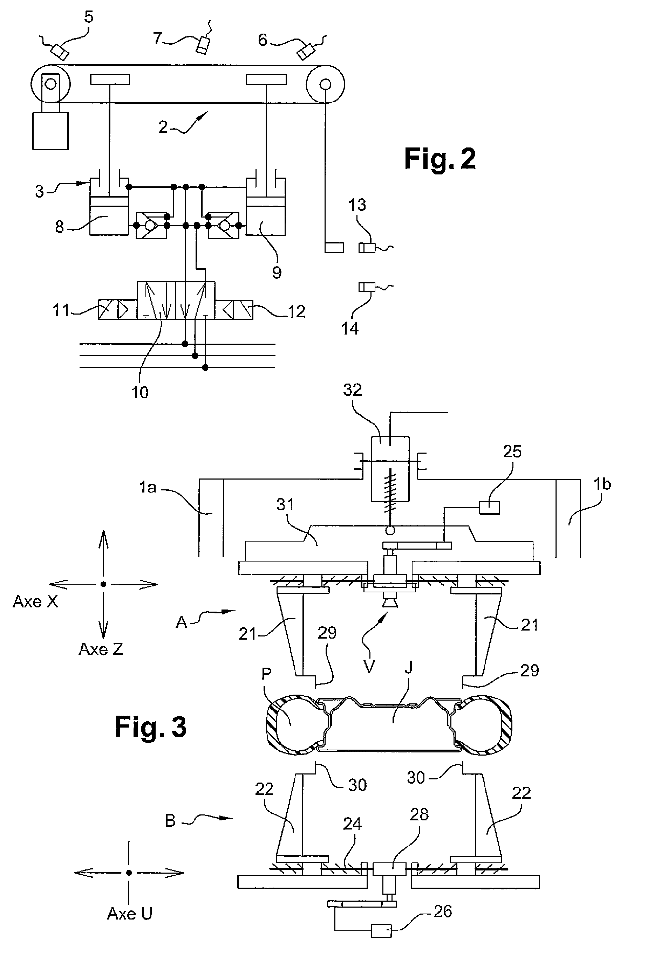

Par exemple, comme le montre la figure 2, les deux bandes du convoyeur (2) sont entraînées par un motoréducteur (4), en combinaison avec des cellules (5) et (6) disposées à l'entrée et à la sortie du convoyeur et d'une cellule (7) apte à détecter la présence de la roue. Le système monte et baisse (3), disposé entre les deux bandes du convoyeur (2), présente une partie support apte à coopérer en appui avec la roue, notamment avec la jante. Cette partie est, par exemple, assujettie à deux vérins pneumatiques (8) et (9) commandés par une électrovanne (10) pilotée par deux actionneurs (11) et (12). Des capteurs (13) et (14) détectent effectivement les positions haute et basse du système (3).

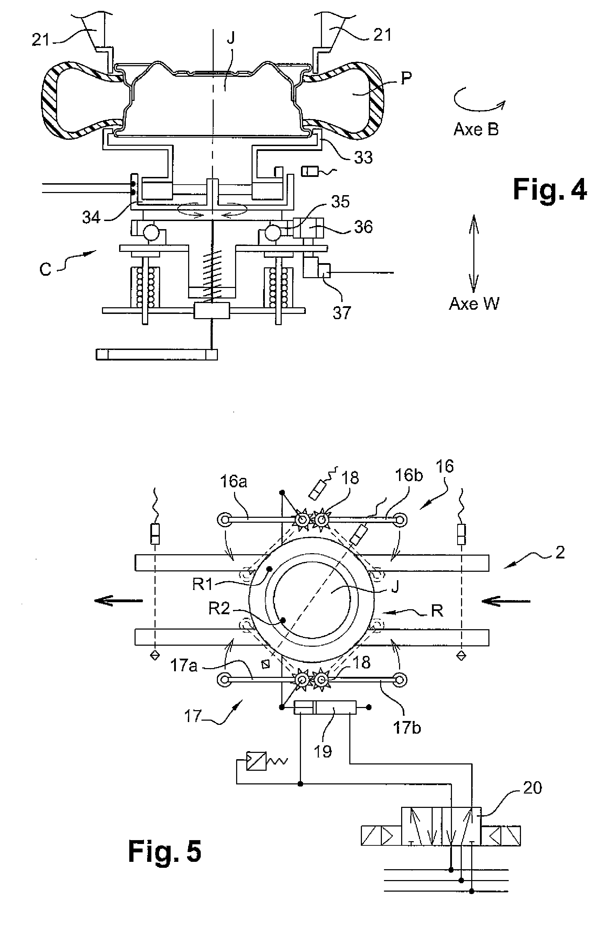

Avantageusement et comme le montre la figure 5, le système monte et baisse (3) est associé à un ensemble centreur de la roue (R) par rapport au système de vision.

Cet ensemble centreur est constitué par deux modules (16) et (17) disposées symétriquement de part et d'autre du convoyeur, en étant assujetti à la cellule de détection de présence de la roue (7).

Chaque module (16) et (17) est constitué de deux bras articulés (16a) - (16b) et (17a) - (17b), avec des organes d'entraînement au niveau de leur articulation (18) pour se refermer à la façon d'un V. La commande simultanée des modules (16) et (17) peut, par exemple, être effectuée par un vérin (19) commandé par une électrovanne (20).

Le système de vision est disposé à la partie supérieure du bâti support (1) coaxialement au système de monte et baisse (3).

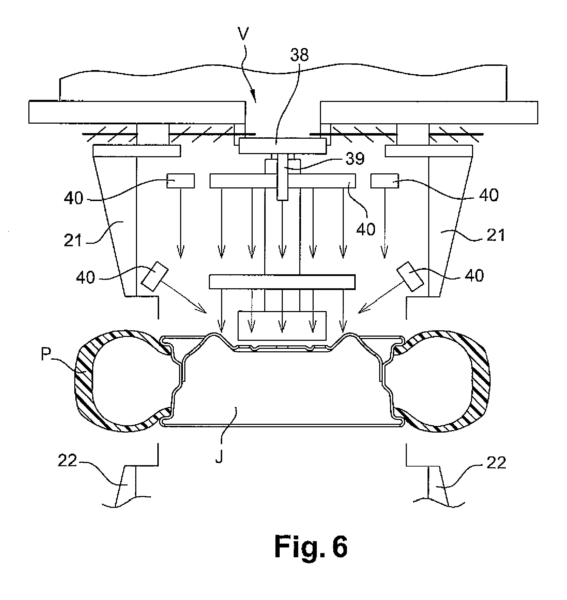

Comme le montre la figure 6, le système de vision (V) est constitué par une ou plusieurs caméras (38) avec son ou leurs objectifs (39), en combinaison avec un système d'éclairage composé, par exemple, de rampes de diodes luminescentes (40). Une carte d'acquisition permet de connecter le système de vision à une unité centrale de commande de traitement (non représentée).

L'ensemble (A), (B), (C) apte à assurer un déplacement circulaire relatif entre la jante et le pneumatique, pour aligner ou mettre en phase, comme indiqué, les repères (R1) et (R2) résultant des calculs effectués par le système de commande, comprend des moyens aptes à détalonner en automatique le pneumatique de la jante, en fonction des caractéristiques de chacun des composants de l'ensemble monté.

Le système de détalonnage est composé, au-dessus du support du système monte et baisse (3) recevant la roue et en-dessous de ce système, de 2 fois quatre mâchoires concentriques (21) et (22) décalées angulairement. Chacune des deux fois 4 mâchoires (21) et (22) est assujettie à une vis à bille (23), (24) pour une commande en X et en U, par un moteur (25), (26) en combinaison avec un ensemble réducteur et renvoi d'angle (27) - (28).

Ces dispositions permettent, d'une manière connue, d'assurer le déplacement simultané et symétrique de chacune des 2 fois quatre mâchoires en position d'écartement ou de rapprochement. Les extrémités de chacune des mâchoires (21) et (22) présentent des patins d'appui (29), (30) aptes à coopérer avec les flancs du pneumatique en vue d'exercer un effort de pression sur les flancs supérieur et inférieur, en vue de positionner précisément les talons supérieur et inférieur du pneu à l'intérieur du creux de la jante. Les mâchoires (21) - (22) sont commandées en hauteur selon les axes (Z et W) pour assurer précisément l'opération de détalonnage en partie inférieure et supérieure du pneumatique.

Le support (31), où sont montées, comme indiqué précédemment, les quatre mâchoires (21), est assujetti à un moyen de commande (32), par exemple sous forme de moteur avec une vis à rouleau, pour permettre ledit déplacement selon l'axe (Z).

Eventuellement, dans une forme de réalisation en variante, l'ensemble (B) peut être remplacé par l'ensemble (A) qui demeure identique.

Comme indiqué, lorsque les différents patins d'appui (29) et (30) exercent un effort de pression au niveau des flancs du pneumatique, ce dernier est détalonné, libérant ainsi la jante qui peut être entraînée en rotation, comme indiqué dans la suite de la description, tandis que le pneumatique demeure en position fixe résultant de l'appui exercé par les patins.

Comme le montre la figure 4, les moyens d'entraînement de la jante sont constitués par deux mors à déplacement parallèle (33), faisant office de pince et commandés pneumatiquement en combinaison avec une règle de mesure. Cette pince (33) est assujettie à un support (34) apte à être entraîné en rotation pour provoquer, d'une manière concomitante, l'entraînement en rotation de la jante sous l'effet de serrage de la pince (33). Dans ce but, le support (34) présente, par exemple, une couronne dentée (35) engrenant avec un système de pignons (36) entraînés par un moteur réducteur (37). On prévoit également de pouvoir régler en hauteur l'ensemble du système d'entraînement en rotation de la jante axe W. Le moteur (37) d'entraînement de la pince de serrage est combiné avec un codeur afin de contrôler sa position résultant du calcul de la valeur de décalage angulaire entre les repères détectés par le système de vision.

Le cycle de fonctionnement est le suivant :
- mise en origine automatique machine selon ensembles montés
- transfert de la roue au moyen du convoyeur au niveau du système de vision ;
- commande des modules de centrage de la roue ;
- identification et/ou calcul des points de balourd
- calcul de l'angle résultant du positionnement des repères ;
- commande des moyens aptes à assurer le détalonnage ;
- commande de la pince pour le serrage de la jante en vue de son entraînement par rapport au pneumatique en fonction du calcul de l'angle ;
- libération des moyens de commande, de serrage, de détalonnage et d'entraînement ;
- évacuation de l'ensemble monté.

A noter que, dès le positionnement correct de l'ensemble monté, un automate ou autre déclenche une prise de l'image.

Un programme de traitement de l'image est encapsulé au sein de l'interface homme - machine, afin de détecter les repères, de calculer l'angle en résultant et de transmettre cette valeur angulaire au système de commande.

A noter que le lancement de l'application est réalisé par un fichier exécutable. Une recette est créée pour chaque campagne c'est-à-dire chaque type d'ensembles montés.

Autrement dit, d'une manière importante, selon l'invention, il n'y a aucune modification et/ou changement d'outillage pendant les opérations qui sont entièrement automatiques, sans aucune intervention manuelle, quel que soit le type d'ensemble monté.

Les repères peuvent être constitués par des pastilles dont l'une est fixée, d'une manière connue, temporairement au niveau de l'un des flancs du pneumatique, tandis que l'autre est fixée à proximité du bord de la jante. Ou bien les repères peuvent être constitués par une pastille fixée temporairement au niveau de l'un des flancs et par la valve que présente la jante, ou par un angle par rapport à une référence donnée sur la jante.

Les avantages ressortent bien de la description, en particulier on souligne et on rappelle :
- la possibilité d'ajuster la valeur de détalonnage en fonction du type d'ensemble monté ;
- pas de serrage de l'ensemble monté par le trou central de la jante ;
- aucun appui sur la face supérieure de la jante ;
- contrôle du bon positionnement des repères en fin d'opération au même poste ;
- un seul et même poste pour la vision et la mise en correspondance des repères ;
- le réglage automatique au bon diamètre des mâchoires de détalonnage, au moyen des servomoteurs ;
- serrage de la jante et rotation contrôlée par des servomoteurs et règles de mesure ;
- qualité du système de vision.

Suivant une autre caractéristique, le dispositif selon l'invention, notamment le système de vision en combinaison avec l'unité de commande et de programmation, peut être utilisé pour des opérations de contrôle qualité de l'ensemble monté, par exemple : présence bouchon valve, présence cabochon jante, reconnaissance type de jante, reconnaissance diamètre de jante.

## Revendications

1. Dispositif pour mettre en correspondance deux repères que présentent une partie d'un pneumatique et une partie d'une jante constituant un ensemble monté, le dispositif étant constitué par un poste monobloc compact comprenant :
- des moyens de positionnement de l'ensemble monté (2) - (3) en regard d'un système de vision (V) apte à localiser les repères ;
- des moyens de calcul de l'angle résultant du décalage des repères ;
- ;des moyens (29) - (30) aptes à détalonner le pneumatique de la jante pour permettre l'entraînement en rotation de la jante par rapport au pneumatique maintenu fixement en position par lesdits moyens 29) - (30) ;
- des moyens d'amenée et d'évacuation de l'ensemble monté ;
**caractérisé en ce que :**
- les moyens aptes à détalonner le pneumatique sont constitués par des patins d'appui (29) - (30) assujettis à des moyens de commande séparés pour coopérer avec les flancs du pneumatique, en vue de positionner précisément les talons supérieur et inférieur du pneu à l'intérieur du creux de la jante ;
- les moyens d'entraînement de la jante sont constitués par une pince de serrage (33) coopérant avec une partie de la jante, ladite pince étant assujettie à des moyens de commande (35) - (36) pour être commandée en rotation par un motoréducteur (37) asservi par le système de vision (V);
- lesdits moyens et ensemble étant assujettis à une unité de commande et de traitement programmable pour un fonctionnement automatique sans intervention manuelle quel que soit le type d'ensemble monté.

2. Dispositif selon la revendication 1, **caractérisé en ce que** les moyens de positionnement de l'ensemble monté sont constitués par un convoyeur (2) associé à un système de monte et baisse (3) pour disposer l'ensemble monté en regard de moyens de centrage de l'ensemble monté et d'entraînement de la jante (33).

3. Dispositif selon la revendication 2, **caractérisé en ce que** les moyens de centrage sont constitués par des modules (16) - (17) venant serrer, d'une manière symétrique, en 4 points la bande de roulement du pneumatique, lesdits modules étant assujettis à un organe de commande.

4. Dispositif selon la revendication 1, **caractérisé en ce que** le système de vision (V) comprend une ou plusieurs caméras (38) et son ou leurs objectifs (39), des rampes d'éclairage (40) de la zone où est centrée la roue, une carte d'acquisition et de transfert des donnée à l'unité de commande et de traitement pour le déplacement circulaire relatif entre la jante et le pneumatique en fonction du calcul de l'angle résultant du décalage des repères.

5. Dispositif selon l'une quelconque des revendications 1 à 4, **caractérisé en ce que** l'unité de commande et de traitement est programmée pour réaliser le cycle de fonctionnement suivant :
- mise en origine automatique selon les ensembles montés ;
- transfert de la roue au moyen du convoyeur au niveau du système de vision ;
- commande des bras de centrage de la roue ;
- identification et/ou calcul des points de balourd ;
- calcul de l'angle résultant du positionnement des repères ;
- commande des moyens aptes à assurer le détalonnage ;
- commande de la pince : serrage de la jante, pour son entraînement par rapport au pneumatique en fonction du calcul de l'angle ;
- libération des moyens de commande, de serrage, de détalonnage et d'entraînement ;
- évacuation de l'ensemble monté.

6. Dispositif selon la revendication 1, **caractérisé en ce que** les repères sont constitués par deux pastilles, l'une étant fixe temporairement au niveau de l'un des flancs du pneumatique, l'autre étant fixée à proximité du bord de la j ante.

7. Dispositif selon la revendication 1, **caractérisé en ce que** l'un des repères est constitué par une pastille fixée temporairement au niveau de l'un des flancs, l'autre repère étant constitué par la valve que présente la jante, ou par un angle par rapport à une référence donnée sur la jante.
